# FASCICULE DE BREVET EUROPEEN

(11) **EP 0 748 263 B1**
(45) Date de publication et mention de la délivrance du brevet: **14.03.2001**
(21) Numéro de dépôt: 95943270.9
(22) Date de dépôt: 22.12.1995
(51) Int. Cl.: B21D 53/16

(54) **PROCEDE POUR LA REALISATION D'UNE COURONNE-JONC, NOTAMMENT POUR MECANISME D'EMBRAYAGE, EN PARTICULIER POUR VEHICULE AUTOMOBILE**
VERFAHREN ZUR HERSTELLUNG EINES RADES FÜR EIN KUPPLUNGSMECHANISMUS, INSBESONDERE FÜR KRAFTFAHRZEUGE
METHOD FOR MAKING A RING COLLAR, PARTICULARLY FOR A MOTOR VEHICLE CLUTCH MECHANISM

(30) Priorité: 28.12.1994 FR 9415760
(43) Date de publication de la demande: 18.12.1996
(73) Titulaire: VALEO, 75017 Paris (FR)
(72) Inventeur: LANZARINI, Ernesto, I-12084 Mondovi (IT); DRAGO, Mario, I-Alba (IT)
(74) Mandataire: Gamonal, Didier
(86) Numéro de dépôt international: FR9501726
(87) Numéro de publication internationale: WO9620052

(56) Documents cités:
- EP-A- 0 453 167
- CA-A- 1 078 153
- US-A- 2 948 322
- PATENT ABSTRACTS OF JAPAN vol. 10 no. 307 (M-527) [2363] ,18 Octobre 1986 & JP,A,61 119344 (NHK SPRING CO LTD) 6 Juin 1986,
- PATENT ABSTRACTS OF JAPAN vol. 8 no. 148 (M-308) [1585] ,11 Juillet 1984 & JP,A,59 045044 (FUJI BARUBU KK) 13 Mars 1984,
- PATENT ABSTRACTS OF JAPAN vol. 10 no. 246 (M-510) [2302] ,23 Août 1986 & JP,A,61 076222 (TOYOTA) 18 Avril 1986,

## Description

L'invention concerne la réalisation des couronnes-joncs du type de celles mises en oeuvre dans certains mécanismes d'embrayage à diaphragme pour fournir un appui axial au diaphragme au côté opposé à l'appui axial qu'il trouve sur le fond du couvercle d'un tel mécanisme, selon le préambule de la revendication 1.

Ces couronnes-joncs sont globalement en forme de tronc de cône.

Pour leur réalisation, il est possible, par exemple, de procéder à un découpage et à un emboutissage d'un flan en métal.

Mais le procédé de réalisation correspondant conduit de manière dispendieuse à des chutes importantes, notamment à l'intérieur de la couronne-jonc obtenue.

Il est possible également de procéder au découpage et à un emboutissage d'un tube.

Mais ce procédé de réalisation implique de manière également dispendieuse la réalisation préalable d'un tel tube, et, s'il s'agit d'un tube borgne, il y a encore une chute non négligeable à l'extrémité correspondante de celui-ci.

Un procédé de réalisation plus économique est connu par le document JP-A-61119344 conforme au préambule de la revendication 1.

S'agissant, donc, de la réalisation d'une couronne d'embrayage, ce document décrit un procédé dans lequel, partant d'une bande en métal, on assure un enroulement en hélice de cette bande, on découpe un tronçon de cette bande correspondant à un pas de l'hélice, on agit axialement sur les deux extrémités de ce tronçon de manière à ce qu'elles soient amenées à être en regard l'une de l'autre, on assure un soudage l'une à l'autre des deux extrémités ainsi alignées de manière à obtenir un anneau cylindrique.

La présente invention a pour objet de tirer partie de ce procédé.

Selon l'invention cet objet est atteint par le procédé de la revendication 1.

Toutes les opérations, qui n'impliquent avantageusement aucune chute, peuvent avantageusement être exécutées les unes à la suite des autres sur une même machine à suivre.

Des caractéristiques préférées et avantages de l'invention ressortiront ailleurs de la description qui va suivre, à titre d'exemple, en référence aux dessins schématiques annexés sur lesquels :
- la figure 1 est une vue partielle en coupe axiale d'un mécanisme d'embrayage mettant en oeuvre une couronne-jonc ;
- la figure 2 est une vue partielle en coupe axiale de cette couronne-jonc ;
- la figure 3 reprend, à échelle supérieure, le détail de la figure 2 repéré par un encart III sur cette figure 2 ;
- les figures 4A, 4B, 4C sont des vues en perspective illustrant trois premières phases du procédé de réalisation suivant l'invention de cette couronne-jonc ;
- les figures 4D, 4E sont des vues en plan illustrant une phase ultérieure de ce procédé ;
- la figure 5 est une vue en plan de l'anneau cylindrique obtenu à ce stade de ce procédé ;
- la figure 6A est une vue partielle de bout de cet anneau, illustrant une éventuelle phase complémentaire du procédé suivant l'invention ;
- la figure 6B est une vue partielle en coupe axiale de cet anneau, illustrant une autre éventuelle phase complémentaire du procédé suivant l'invention ;
- la figure 6C est une vue en coupe axiale de la couronne-jonc obtenue au terme du procédé de réalisation suivant l'invention ;
- la figure 7 est une vue en perspective illustrant une éventuelle phase préalable du procédé de réalisation suivant l'invention.

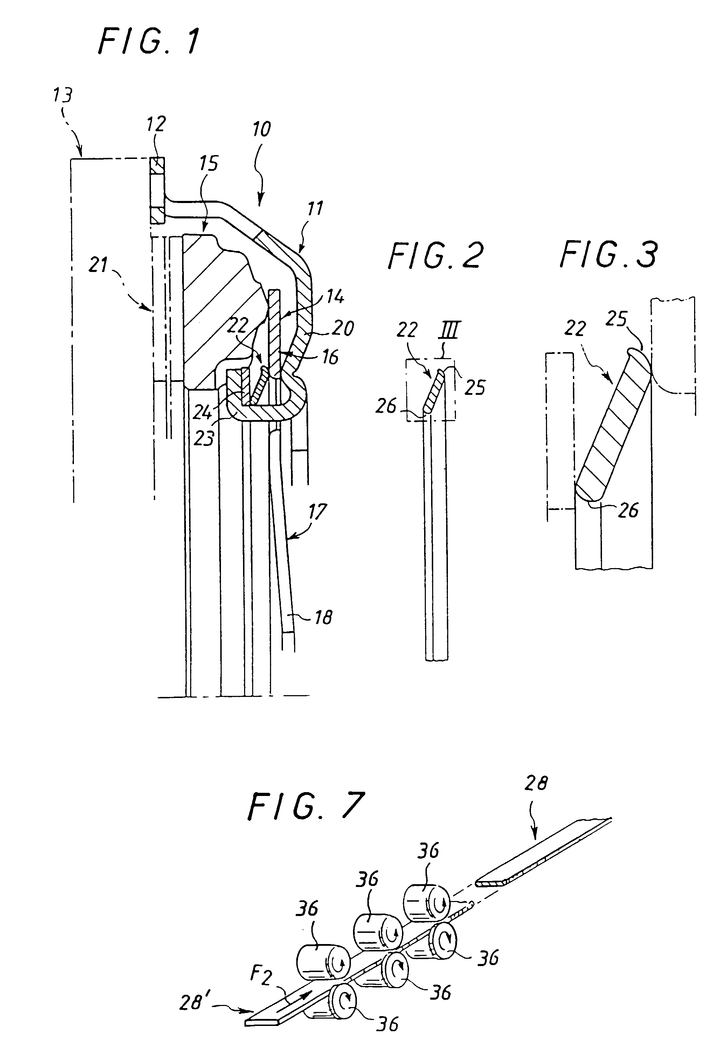

A la figure 1 on reconnaît un mécanisme d'embrayage 10 comportant, sous forme de pièces globalement annulaires, un couvercle 11, par un rebord transversal 12 duquel il est destiné à être rapporté sur un plateau de réaction 13, schématisé en traits interrompus sur la figure 1, un diaphragme 14, et un plateau de pression 15.

Le diaphragme 14 comporte lui-même une partie périphérique 16, formant rondelle Belleville, et une partie centrale 17, fragmentée en doigts radiaux 18 par des fentes.

Par sa partie périphérique 16, le diaphragme 14 prend appui sur le fond 20 du couvercle 11, et il porte sur le plateau de pression 15, pour sollicitation de celui-ci en direction du plateau de réaction 13, et, ainsi, serrage axial d'un disque de friction 21 inséré entre ce plateau de pression 15 et ce plateau de réaction 13, tel que schématisé en traits interrompus sur la figure 1.

Pour fournir un appui axial à la partie périphérique 16 du diaphragme 14 du côté opposé au fond 20 du couvercle 11, il est prévu une couronne-jonc 22 qui trouve elle-même un appui axial sur des organes 23 intervenant circulairement de place en place et solidaires du couvercle 11.

Ici, ces organes 23 sont formés par des pattes qui, venues d'un seul tenant du fond 20 du couvercle 11, à compter de l'ouverture centrale de celui-ci, sont dûment pliées en équerre, et la couronne-jonc 22 prend appui sur ces organes 23 par l'intermédiaire d'une rondelle 24, qui sert de contre-outil lors du pliage de ces organes 23 et qui évite que la couronne-jonc 22 ne vienne se coincer dans le coude de pliage de ceux-ci.

La couronne-jonc 22 a globalement une forme de tronc de cône.

Par sa périphérie de plus grand diamètre, elle porte sur la partie périphérique 16 du diaphragme 14.

Ici, la tranche 25 correspondante est dûment profilée en conséquence, par un large arrondi.

Par sa périphérie de plus petit diamètre, la couronne-jonc 22 prend appui sur la rondelle 24.

Ici, sa tranche 26 correspondante est également dûment profilée en conséquence, par un large arrondi.

La section transversale de la couronne-jonc 22 présente donc, ici, un profil particulier.

Ce profil étant bien connu, et ne relevant pas de la présente invention, il ne sera pas plus détaillé ici.

Pour la réalisation de la couronne-jonc 22, qui s'étend circulairement en continu, il peut suivant l'invention être procédé comme suit.

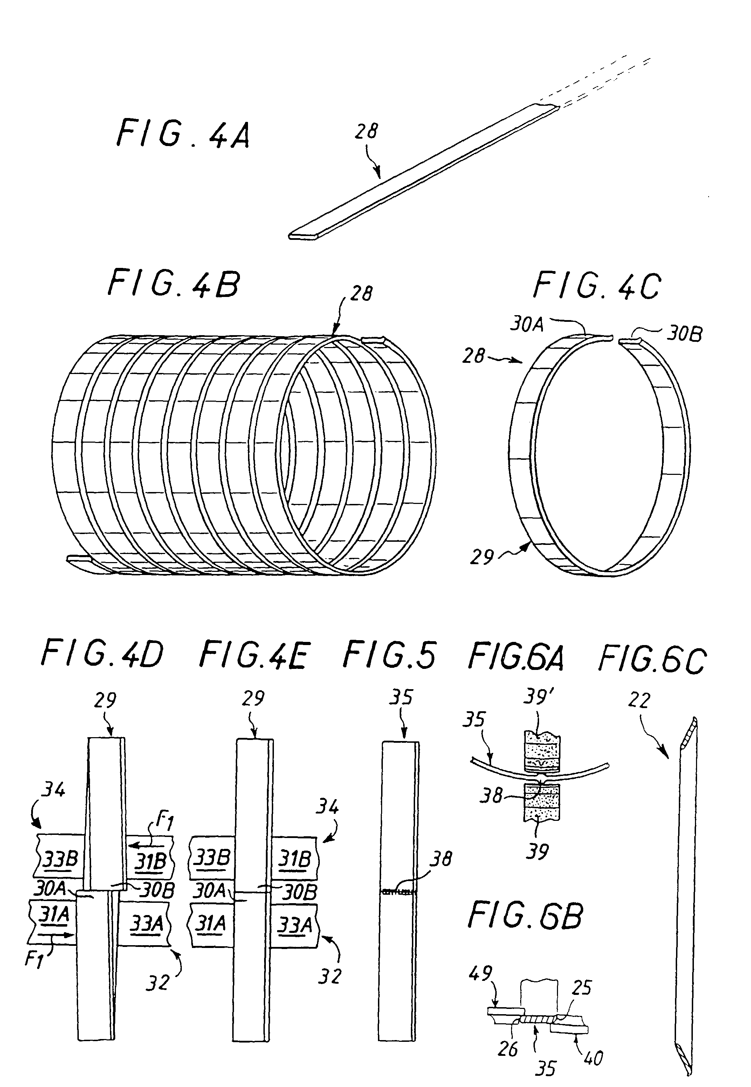

Partant d'une bande 28 en métal, figure 4A, on assure un enroulement en hélice de cette bande 28, figure 4B, et, dans un premier temps, on découpe un tronçon 29 de cette bande 28 correspondant à un pas de cette hélice, figure 4C.

Dans un deuxième temps, figure 4D, on agit axialement sur les deux extrémités 30A, 30B de ce tronçon 29, alors décalées axialement l'une par rapport à l'autre, de manière à ce qu'elles soient amenées à être exactement en regard l'une de l'autre, comme représenté sur la figure 4E.

Par exemple, et tel que schématisé sur les figures 4D et 4E, on agit axialement sur les deux extrémités 30A, 30B du tronçon 29 à l'aide des deux branches 31A, 31B, mobiles, d'une pince 32, suivant les flèches F1 de la figure 4D, tout en contrebutant ce tronçon 29, du côté diamétralement opposé à ces extrémités 30A, 30B, par les branches 33A, 33B, fixes, d'une autre pince 34.

On assure ensuite un soudage l'une à l'autre des deux extrémités 30A, 30B ainsi alignées du tronçon 29, de manière à obtenir un anneau 35 cylindrique, tel que représenté à la figure 5.

Il suffit, ensuite, de mettre en forme de tronc de cône cet anneau 35, par exemple par emboutissage à la presse. On obtient ainsi, tel que représenté à la figure 6C, la couronne-jonc 22 recherchée.

Suivant un premier mode possible de mise en oeuvre de l'invention, on choisit pour bande de départ une bande 28 présentant en section transversale le profil souhaité pour la section transversale de la couronne-jonc 22 à réaliser, tel que représenté à la figure 4A.

En variante, et tel que représenté à la figure 7, on choisit pour bande de départ une bande 28' de section transversale rectangulaire, et, préalablement à son enroulement en hélice, on assure un profilage de cette bande 28' suivant la section transversale souhaitée pour la couronne-jonc 22 à réaliser.

Par exemple, et tel que représenté à la figure 7, on engage, suivant la flèche F2, cette bande 28' de départ entre des rouleaux de profilage 36 intervenant simultanément sur l'une et l'autre de ses faces.

Il est ainsi obtenu, à la sortie de ces rouleaux de profilage 36, la bande 28 présentant en section transversale le profil souhaité pour la section transversale de la couronne-jonc 22 à réaliser.

L'anneau 35 présentant inévitablement, suivant sa génératrice de soudage 38, un cordon de soudure qui fait saillie tant sur sa surface extérieure que sa surface intérieure, on assure préalablement à sa mise en forme de tronc de cône, un ébavurage de cet anneau 35 le long de cette génératrice de soudage 38.

Ici, figure 6A, cet ébavurage est conduit à l'aide de deux molettes 39, 391, intervenant, l'une, du côté de la surface extérieure de l'anneau 35, l'autre du côté de sa surface intérieure, et dûment profilées en conséquence.

Enfin, préalablement à la mise en forme en tronc de cône de l'anneau 35, on assure également un ébavurage de ses tranches 25, 26, figure 6B.

Ici, cet ébavurage est conduit à l'aide de meules 40, 41, intervenant, l'une, sur sa tranche 25, l'autre sur sa tranche 26, et dûment profilées en conséquence.

Bien entendu, la présente invention ne se limite pas à la forme de réalisation décrite et représentée, mais englobe toute variante d'exécution qui ne sort pas du cadre de l'invention telle que revendiquée.

## Revendications

1. Procédé pour la réalisation d'une couronne d'embrayage dans lequel partant d'une bande (28, 28') en métal, on assure un enroulement en hélice de cette bande (28, 28'), on découpe un tronçon (29) de cette bande (28, 28') correspondant à un pas de l'hélice, on agit axialement sur les deux extrémités (30A, 30B) de ce tronçon (29) de manière à ce qu'elles soient amenées à être en regard l'une de l'autre, on assure un soudage l'une à l'autre des deux extrémités (30A, 30B) ainsi alignées de manière à obtenir un anneau (35) cylindrique, caractérisé en ce que ensuite on assure un ébavurage de cet anneau (35) le long de sa génératrice de soudage (38) et de ses tranches (25, 26) et en ce que on met en forme de tronc de cône cet anneau (35) pour formation d'une couronne-jonc pour fournir un appui axial à la partie périphérique (16) d'un diaphragme (14).

2. Procédé suivant la revendication 1, caractérisé en ce que on choisit pour bande (28) de départ, une bande (28) présentant en section transversale le profil souhaité pour la section transversale de la couronne-jonc (22) à réaliser.

3. Procédé suivant la revendication 1, caractérisé en ce que on choisit pour bande (28') de départ, une bande (28') de section transversale rectangulaire, et, préalablement à son enroulement en hélice, on assure un profilage de cette bande (28') suivant la section transversale souhaitée pour la couronne-jonc (22) à réaliser.

4. Procédé suivant la revendication 1, caractérisé en ce que on met en forme de tronc de cône l'anneau (35) par emboutissage à la presse.

## Patentansprüche

1. Verfahren zur Herstellung eines Ringkranzes für eine Kupplung, bei dem ausgehend von einem Metallstreifen (28, 28') eine spiralförmige Wicklung dieses Streifens (28, 28') ausgeführt wird, woraufhin ein Teilstück (29) dieses Streifens (28, 28') entsprechend einer Spiralsteigung abgeschnitten wird, woraufhin axial auf die beiden Enden (30A, 30B) dieses Teilstücks (29) so eingewirkt wird, daß sie einander gegenüber verbracht werden, woraufhin die beiden so ausgerichteten Enden (30A, 30B) miteinander verschweißt werden, um einen zylindrischen Ring (35) zu erhalten, **dadurch gekennzeichnet**, daß anschließend eine Entgratung dieses Rings (35) entlang seiner Schweißerzeugenden (38) und seiner Kanten (25, 26) erfolgt und daß dieser Ring (35) in eine Kegelstumpfform gebracht wird, um einen Ringkranz zur Bildung einer axialen Auflage für den Umfangsteil (16) einer Membranfeder zu schaffen.

2. Verfahren nach Anspruch 1, **dadurch gekennzeichnet**, daß als Ausgangsstreifen (28) ein Streifen (28) gewählt wird, der im Querschnitt das gewünschte Profil für den Querschnitt des auszuführenden Ringkranzes (22) aufweist.

3. Verfahren nach Anspruch 1, **dadurch gekennzeichnet**, daß als Ausgangsstreifen (28') ein Streifen (28') mit rechteckigem Querschnitt gewählt wird und vor seiner Wicklung zur Spirale eine Profilierung dieses Streifens (28') entsprechend dem gewünschten Querschnitt für den auszuführenden Ringkranz (22) erfolgt.

4. Verfahren nach Anspruch 1, **dadurch gekennzeichnet**, daß der Ring (35) durch Tiefziehen mit der Presse in Kegelstumpfform gebracht wird.

## Claims

1. A method of making a clutch crown, in which, starting with a metal strip (28, 28'), the said strip (28, 28') is rolled in a helix, a length (29) of the said strip (28, 28') corresponding to one pitch of the helix is cut off, the two ends (30a, 30b) of the said length (29) are acted on axially in such a way that they are brought into facing relationship with each other, the two ends (30a, 30b) thus aligned are welded to each other so as to obtain a cylindrical annular ring (35), characterised in that the said ring (35) is subsequently deburred along the generatrix of its weld (38) and of its edges (25, 26), and in that the said ring (35) is formed into a frustum of a cone so as to form a crown ring whereby to act as an axial abutment for the peripheral part (16) of a diaphragm (14).

2. A method according to Claim 1, characterised in that a strip (28) is chosen as the starting strip (28) which has, in transverse cross section, the profile desired for the transverse cross section of the crown ring (28) which is to be made.

3. A method according to Claim 1, characterised in that a strip (28') is chosen as the starting strip (28') which has a rectangular transverse cross section, and, before it is wound into a helix, the said strip (28') is profiled to the transverse cross section desired for the crown ring (22) which is to be made.

4. A method according to Claim 1, characterised in that the ring (35) is put into the form of a frustum of a cone by press-forming.
